# EUROPEAN PATENT APPLICATION

(11) **EP 1 505 382 A1**
(43) Date of publication of application: **09.02.2005**
(21) Application number: 03017603.6
(22) Date of filing: 08.08.2003
(51) Int. Cl.: G01N 21/35, G01N 22/00, G01N 21/03

(54) **Use of the plastic materials topas and zeonex for biotechnological applications in the terahertz range**

(71) Applicant: Albert-Ludwigs-Universität Freiburg, 79104 Freiburg (DE)
(72) Inventor: Fischer, Bernd, Albert-Ludwigs-Univ. Freiburg, 79104 Freiburg (DE); Hoffmann, Matthias, Albert-Ludwigs-Univ. Freiburg, 79104 Freiburg (DE); Jepsen, Uhd Peter, Dr. Albert-Ludwigs-Uni.Freiburg, 79104 Freiburg (DE); Walther, Marcus. Albert-Ludwigs-Uni.Freiburg, 79104 Freiburg (DE)
(74) Representative: VOSSIUS & PARTNER

(57) **Abstract**

The invention describes the use of a plastic material based on nonpolar, amorphous cyclic olefins in the measurement of the properties of a sample material using electromagnetic radiation having a frequency from about 0.05 THz to about 10 THz. In particular, the plastics material may be used as a substrate material supporting said sample material, or for optical components such as lenses, windows, waveguides, or optical fibers.

## Description

The present invention relates to the use of plastics materials in measurements using electromagnetic radiation having a frequency from about 0.05 THz to about 10 THz, in particular, in biotechnological applications.

In analytical methods relying on optical measurements of quantities such as fluorescence, absorption, dispersion, or reflection of a sample, it is of utmost importance for the interpretation of the experimental data that the recorded signal originates from the sample and not from the surroundings. The surroundings can be the substrate material supporting the sample, in particular a substrate on which the sample is placed for the measurement, or a cuvette containing the sample in liquid solution, but also optical components used in the measurement.

False signals may arise e.g. in a fluorescence measurement, where a sample is illuminated with light at short wavelength, and the resulting long-wavelength fluorescence is observed. In this very common type of experiment, a source of false signal is fluorescence from the material surrounding the sample material, as described above.

In a transmission measurement, where the properties absorption and/or dispersion are measured, a limiting factor for the useful wavelength range is that the material surrounding the sample has unwanted absorption bands, contributing to the measured quantities. Also in this situation fluorescence from the surrounding material may disturb the measurement.

In biotechnological applications involving optical measurements of the types described above the optical quality of substrate and/or container materials is of overwhelming importance. The reason is that measurements in this field are often carried out on minute amounts of sample material, with a sometimes very small signal. Therefore, measurements often involve relatively strong illumination of the sample, and subsequent detection of extremely low light levels, or difference signals. Especially in such situations it can be fatal for the interpretation of the measurement if the material surrounding the sample contributes with even small amounts of absorption, dispersion, or fluorescence.

In the visible range a variety of well suited materials used as transparent substrates and containers is fused silica (quartz), which has appealing optical and mechanical properties, such as high transparency, high hardness, chemical inertness, harmless to biological tissue, and easy cleaning properties. Some plastic types with optical quality approaching those of fused silica have recently appeared.

In the recent years there has been an increasing activity from the sides of basic research and also from industry in the exploitation of the far infrared spectral region for biotechnological applications. In this frequency range, here defined as the range from 0.05 THz to 10 THz, many biomolecular systems have specific absorption features originating from their global configurations, and therefore label-free recognition of the state of biomolecules appears feasible, and has indeed been demonstrated for some molecule classes, like short DNA strings or small proteins. The activity in this field will continue to grow in the next years. There is a need to provide commercial equipment for biotechnological applications based on optical measurements in the far-infrared spectral region within a few years.

One problem arising in the far-infrared spectral region is the difficulty in finding suitable materials for use in such measurements, in particular suitable material for supporting the sample to be examined, such as substrates or containers, or for optical components. Most glass materials, which have appealing properties in the visible range, are useless in the far infrared due to strong absorption. A few plastic types are transparent in the far infrared, e.g. Teflon, polyethylene (PE), or polymethylpentene (TPX). However, these plastics materials have intrinsic problems when it comes to biotechnological applications. In particular, Teflon is not useful in biotechnological applications due to its non-sticking properties, PE and TPX are difficult to clean owing to their low chemical resistance. Furthermore, the combination of high quality both in the visible range and in the far infrared has so far not been found. Teflon and PE is completely opaque in the visible range, TPX has high fluorescence and poor blue/UV transmission.

It is therefore an object of the invention to overcome the above described problems which arise in measurements using electromagnetic radiation in the far infrared region, i.e. at frequencies between about 0.05 Thz and about 10 Thz.

In order to achieve this object, the present invention describes the use of a plastics material in accordance with the claims.

According to the invention, the plastic material used in measurement using electromagnetic radiation having a frequency from about 0.05 THz to about 10 THz is based on nonpolar, amorphous cyclic olefins. These plastic materials provide perfect optical properties in this frequency range. The use of these materials comprises the use as a substrate material supporting the sample material to be examined, the sample material being placed on, or embedded in said substrate material, and the use of these sample materials in optical components, such as lenses, windows, waveguides, or optical fibers.

The plastics materials used in accordance with the present invention are useful in measurements of absorption, dispersion, scattering, and/or reflection of said sample material in the far infrared region, in the transmission or in the reflection mode, or in measurements of the electromagnetic radiation transmitted through a resonator structure, wherein the resonance frequency is a measure of properties of the sample material placed in the resonator.

Furthermore, the plastic materials used in accordance with the invention combine the perfect properties in the far infrared region with very good optical properties in other frequency ranges. The optical properties approach those of fused silica in the visible range, including the near-UV range, which is particularly important for biotechnological applications. At the same time this material is chemically resistant against most polar solvents, as well as most diluted and concentrated acids and bases. Due to high damage temperatures compared with other plastic materials, these materials can be autoclaved. Therefore, these materials are particularly useful in biotechnological applications.

The brand names of the plastics to be used in accordance with the invention are TOPAS (manufactured by TICONA), an amorphous cyclic olefin copolymer, and ZEONEX (manufactured by Zeon, Inc.). Both plastics are commercially available.

In the following, the invention will be explained in greater detail with reference to the accompanying drawings. In the drawings
- Fig. 1: shows the absorption coefficient and the index of refraction in the far-infrared frequency range of plexiglas in comparison with plastics materials to be used in accordance with the present invention; and
- Fig. 2: schematically illustrates a measurement in (a) transmission mode, (b) reflection mode, and (c) a measurement of transmission through a resonator structure.

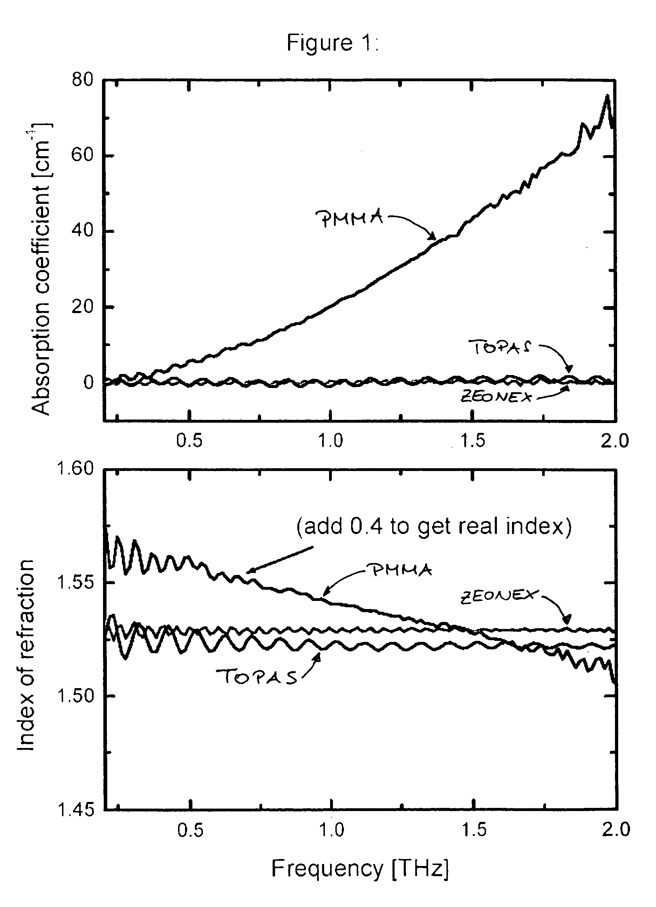

In Figure 1 typical absorption and index of refraction in the far infrared frequency range is shown for representative plastics from the following specific types of the plastics:
- TOPAS 8007S-04, 6013S-04, 6015S-04, 5013, 6017
- ZEONEX 330R, E48R, 480R

These plastics are all based on polymers of nonpolar cyclic olefins. The difference between the different types is related to modifications of the side groups to the polymer backbones.

The absorption and index of refraction of these plastics is compared to the optical properties PMMA (Plexiglas).

Typical for all the TOPAS and ZEONEX plastics is a very low absorption and a constant index of refraction, showing that the plastics are dispersion-free in the far infrared. This lack of dispersion makes the plastics investigated here ideal materials for optical components. The oscillations seen in the absorption- and index traces in Figure 1 is a well-known effect caused by multiple reflections in the sample, and not due to absorption or dispersion. If the measurement is repeated on thicker samples, this oscillatory behaviour disappears. In contrast thereto, the absorption of PMMA raises significantly over the whole frequency range, up to about 70 cm⁻¹ at a frequency of 2.0 THz

The extremely low absorption in the plastics according to the invention is related to the nonpolar and amorphous polymer chains forming the plastics. In the far-infrared range absorption in plastics and glasses is caused by the presence of polar molecules or polymers, and by the crystalline regions in the material. It should be stressed that in the lower graph in Fig. 1, 0.4 has been subtracted from the index of refraction of PMMA.

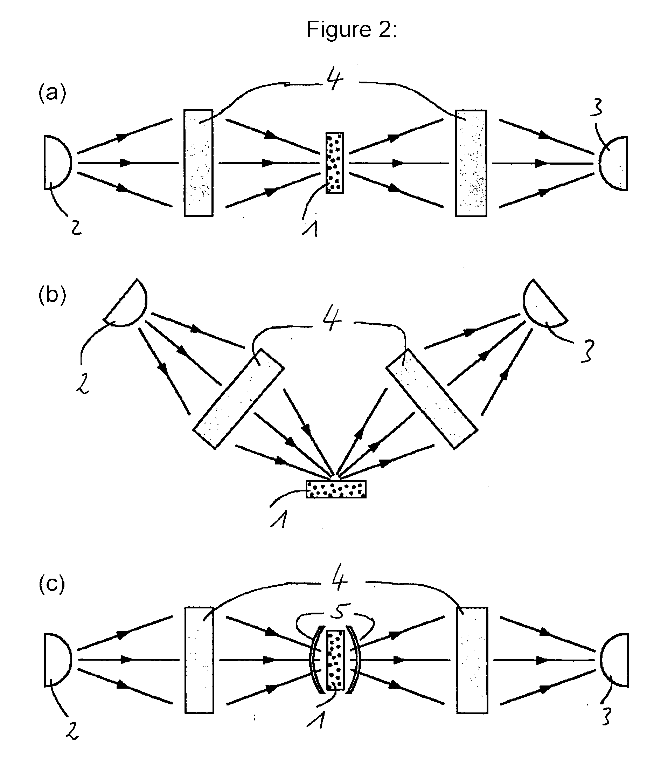

The drawings in Figure 2(a) and 2(b) define what is meant by transmission mode and reflection mode measurements, respectively. Electromagnetic radiation which is emitted by a light source 2 is focused by guiding optics 4 to a target 1 to be examined. The target 1 may comprise the sample material and a substrate material supporting the sample material as described above. The radiation which is transmitted though the target 1 (see Fig. 2(a)) or emitted or reflected by the target (Fig. 2(b)) under a certain angle is focused to a detector 3. The transmission mode is particularly useful to measure the absorption of the target, while in the reflection mode, scattering, reflection or fluorescence may be measured.

Furthermore, Figure 2(c) illustrates schematically a measurement of transmission through a resonator structure. In this case, the target 1 is arranged inside a resonator 5. The resonance frequency is a measure of properties of the sample material comprised in the target 1.

The measurements in the far-infrared may be carried out either in free space, where guiding of the far-infrared light is done by conventional optical elements such as lenses and mirrors, or in an integrated structure, where generation, guiding, and detection of the far-infrared light is realised by microscopic waveguide structures embedded in, or placed on top of a substrate material.

## Claims

1. Process for measuring properties of a sample material by means of electromagnetic radiation, and with further plastics material in the path in the electromagnetic radiation, wherein the plastics material is based on nonpolar, amorphous cyclic olefins and wherein the electromagnetic radiation has a frequency from about 0.05 THz to about 10 THz.

2. Process according to claim 1, wherein said plastic material is used as a substrate material supporting said sample material.

3. Process according to claim 1 or 2, wherein said sample material is placed on, or embedded in said substrate material.

4. Process according to claim 1, 2 or 3, wherein said sample material is placed on a substrate comprising said substrate material.

5. Process according to claim 1, 2 or 3, wherein said sample material is contained in a cuvette comprising said substrate material.

6. Process according to any one of the preceding claims, wherein the properties of absorption, scattering, and/or dispersion of said sample material is measured.

7. Process according to any one of the preceding claims, wherein said measurement is carried out in transmission mode.

8. Process according to any one of claims 1 to 6, wherein said measurement is carried out in reflection mode

9. Process according to any one of claims 1 to 6, wherein the electromagnetic radiation transmitted through a resonator structure is measured.

10. Process according to any one of the preceding claims, wherein said measurement is combined with a further measurement of absorption, dispersion, scattering, reflection, and/or fluorescence of said sample material of electromagnetic radiation in other frequency ranges, such as light in the near-infrared, the visible and the ultraviolet region and/or the X-ray region.

11. Process according to any one of the preceding claims, wherein said plastic material is TOPAS and/or ZEONEX.

12. Process according to any one of the preceding claims, wherein said sample comprises a biomolecular system.

13. Process according to any one of claims 1 to 11 wherein said plastics material is included in optical components, such as lenses, windows, waveguides, or optical fibers.

14. An optical component made of plastics material based on non-polar, amorphous cyclic olefins.

15. An optical component of claim 14 comprising a lens, a window, a waveguide or an optical fibre.
